# EUROPEAN PATENT APPLICATION

(11) **EP 4 394 148 A1**
(43) Date of publication of application: **03.07.2024**
(21) Application number: 22913831.8
(22) Date of filing: 10.11.2022
(51) Int. Cl.: E05B 3/00, E05B 1/00

(54) **HANDLE LINKAGE STRUCTURE AND HANDLE ASSEMBLY**

(30) Priority: 31.12.2021 CN 202111676028
(71) Applicant: Guangdong Mingmen Locks Industry Co., Ltd., Zhongshan, Guangdong 528414 (CN)
(72) Inventor: MAO, Liming, Zhongshan, Guangdong 528414 (CN); TANG, Hailong, Zhongshan, Guangdong 528414 (CN); ZHOU, Weixiu, Zhongshan, Guangdong 528414 (CN)
(74) Representative: ABG Intellectual Property Law, S.L.
(86) International application number: PCT/CN2022/131097
(87) International publication number: WO 2023/124568

(57) **Abstract**

Disclosed is a handle linkage structure and a handle assembly having the same. The handle assembly includes: a holder, a first connecting part, a second connecting part, a guide pin, and a handle. The first connecting part is rotatably disposed on the holder around an axial direction, the second connecting part is sleeved on the other end of the first connecting part at, and the guide pin is slidably disposed in the holder along the axial direction. The guide pin has a side surface abutting against an end of the second connecting part close to the holder and the inclined surface of the first connecting part. The handle is sleeved on the other end of the holder, and the other end of the second connecting part abuts against the assembly hole of the handle. When the handle is pushed or pulled, the second connecting part can be driven to move into the holder, and then the first connecting part can be driven to rotate through the guide pin, causing the square core of the lock at the other end of the first connecting part to rotate, thereby realizing unlocking.

## Description

This application claims priority to Chinese Patent Application No. 2021116760283, entitled "Handle Linkage Structure and Handle Assembly", and filed on December 31, 2021, the entire content of which is incorporated herein by reference.

### TECHNICAL FIELD

The present disclosure relates to the technical field of locks, and particularly, to a handle linkage structure and a handle assembly.

### BACKGROUND

A handle of a door lock is usually directly connected to the square core inside the lock. By turning the handle, the square core can be rotated to retract the lock tongue to unlock the door. However, different users have different unlocking habits, such as rotating the handle clockwise, rotating the handle counterclockwise, pushing the handle inward, pulling the handle outward, etc. The handles of existing door locks often only support the above unlocking methods, which will give users a poor experience for door locks used in public places. In addition, the door lock may be provided with handles on both the inside and outside of the door. When the handle at one side is rotated/pushed or pulled, the handle at the other side will operate at the same time, causing the door lock to require a large external force to unlock.

### SUMMARY

This disclosure is to provide a handle linkage structure and a handle assembly having the same, so as to solve at least one of the above technical problems.

In order to achieve the above objectives, an embodiment of the present disclosure provides a handle linkage structure, including:
a holder having a first limiting part with a hollow cylindrical shape at one end;
a first connecting part rotatably disposed on the holder around an axial direction and having one end provided with a square core hole and the other end inserted into the holder, wherein the first connecting part has an outer periphery provided with a first connecting groove having a groove wall that has an inclined surface at one side thereof, and wherein the first connecting groove has a width at one end close to the square core hole smaller than that at the other end away from the square core hole;
a second connecting part having a hollow cylindrical structure at one end, and the other end of the second connecting part being sleeved on the first connecting part; and
a guide pin slidably disposed in the first limiting part along the axial direction and having a side surface abutting against an end of the second connecting part close to the holder and the inclined surface.

In order to achieve the above objectives, an embodiment of the present disclosure also provides a handle assembly, including:
the handle linkage structure as described above;
a handle having one end sleeved on the other end of the holder, wherein the handle is configured to swing around a radial direction of the first connecting part, and is in contact with an end surface of the second connecting part.

According to the above description and practice, the handle linkage structure of the present disclosure can push the guide pin to move toward the inner end through the second connecting part. As the guide pin can only slide along the axial direction in the holder and cannot rotate around the axial direction, the first connecting part can rotate by being pushed by the guide pin and the inner end of the first connecting part can drive the square core of the lock to rotate together, thereby realizing unlocking. The handle linkage structure is applied to the handle assembly and the handle is sleeved on the other end of the holder and is configured to only swing in the radial direction around the first connecting part, so that the handle can be indirectly connected with the square core of the lock. When the handle at one side of the door lock is pushed or pulled, the second connecting part will move inward to unlock the door. Meanwhile, the handle at the other side of the door lock will not move simultaneously, which can reduce the force required to unlock the door.

### BRIEF DESCRIPTION OF DRAWINGS

The present disclosure will become clearer and easier to understand with reference to the description of the embodiments thereof in conjunction with the drawings, in which:
Figs. 1a and 1b are two schematic cross-sectional views, which are perpendicular to each other, of the handle linkage structure according to Embodiment 1;
Figs. 2a and 2b are exploded schematic views of the handle linkage structure according to Embodiment 1 from two different view angles;
Figs. 3a and 3b are schematic structural diagrams of the holder according to Embodiment 1 from two different view angles;
Figs. 4a and 4b are schematic structural diagrams of the first connecting part according to Embodiment 1 from two different view angles;
Figs. 5a and 5b are schematic structural diagrams of the second connecting part according to Embodiment 1 from two different view angles;
Fig. 6 is a schematic structural diagram of the reset torsion spring according to Embodiment 1;
Figs. 7a and 7b are two schematic cross-sectional views, which are perpendicular to each other, of the handle assembly according to Embodiment 1;
Fig. 8 is an exploded schematic diagram of the handle assembly according to Embodiment 1;
Fig. 9 is a schematic structural diagram of the handle according to Embodiment 1;
Figs. 10a and 10b are exploded schematic views of the handle assembly according to Embodiment 2 from two different view angles;
Fig. 11 is a schematic structural diagram of the handle assembly according to the Embodiment 2; and
Figs. 12a and 12b are schematic structural diagrams of the holder according to Embodiment 2 from two different view angles.

In the drawings, the reference signs are as follows:
1- handle 11- installation hole 12- protruding part
13- limiting baffle 14- limiting block 15- auxiliary plate
131- limiting hole 2- holder 21- first limiting part
22- installation part 23-first sliding groove 24- first limiting groove
25- second limiting part 26- second sliding groove 27-engagement base
28- elastic retaining ring for hole 29-ring-shaped engagement groove 211-limiting abutment
212-positioning abutment 3-first connecting part 31-qsquare core hole
32-first connecting groove 3- ring-shaped abutment 34- square core connecting part
4- second connecting part 41- second connecting groove 42- limiting boss
43- second limiting groove 5- guide pin 6- reset spring
71- first sealing plate 72- second sealing plate 8- reset torsion spring
9- handle limiting part 91- stopper 92- elastic retaining ring for shaft

### DETAILED DESCRIPTIONS

exemplary embodiments will now be described more fully with reference to the accompanying drawings. exemplary embodiments may, however, be embodied in various forms and should not be construed as limited to the examples set forth herein; rather, these embodiments are provided so that this disclosure will be thorough and complete and will fully convey the concepts of the exemplary embodiments to those skilled in the art. The described features, structures or characteristics may be combined in any suitable manner in one or more embodiments.

Furthermore, the drawings are merely schematic illustrations of the present disclosure and are not necessarily drawn to scale. The same reference numerals in the drawings represent the same or similar parts, and thus their repeated description will be omitted. It should be noted that in this disclosure, the terms "comprising", "disposed with", and "disposed in" are used to express an open inclusive meaning, and means that there may also be additional elements/components/etc., other than elements/components/etc., as those listed. The terms "first", "second", etc. are used only as labels and are not limitations on the number or order of their objects; the terms representing orientations or positional relationships as indicated by "center", "upper", "lower" "left", "right", "vertical", "horizontal", "inner", "outer", etc., are based on the orientations or positional relationships shown in the accompanying drawings and are only for the convenience of description and simplification of the disclosure and are not intended to indicate or imply that the device or element referred to necessarily have a specific orientation, be constructed and operate in a specific orientation, and therefore should not be construed as a limitation on the present disclosure.

Unless otherwise clearly stated and limited, the terms "installation", "connection" and "coupling" should be understood in a broad sense. For example, it can be a fixed connection, a detachable connection, or an integral connection; it can be a mechanical connection, or an electrical connection; it can be a direct connection, or indirect connection through an intermediate medium, or it can be an internal communication between two components. For those of ordinary skill in the art, the specific meanings of the above terms in this disclosure can be understood on a case-by-case basis.

In this disclosure, singular expressions (e.g., a, an) are intended to include the plural form as well, unless specifically stated otherwise. In addition, in this disclosure, when "one embodiment", "some embodiments" or similar expressions are used, it may refer to the same one or some embodiments, or it may refer to different one or some different embodiments., unless otherwise specified.

### Embodiment 1

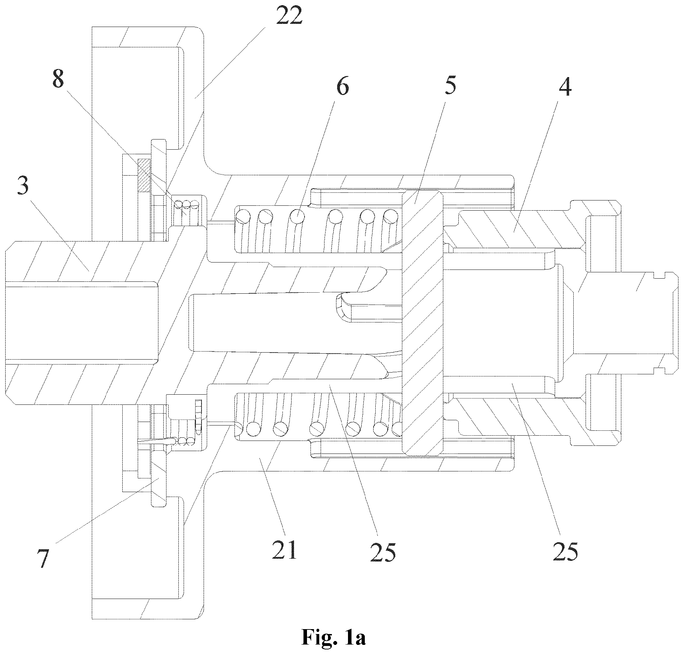

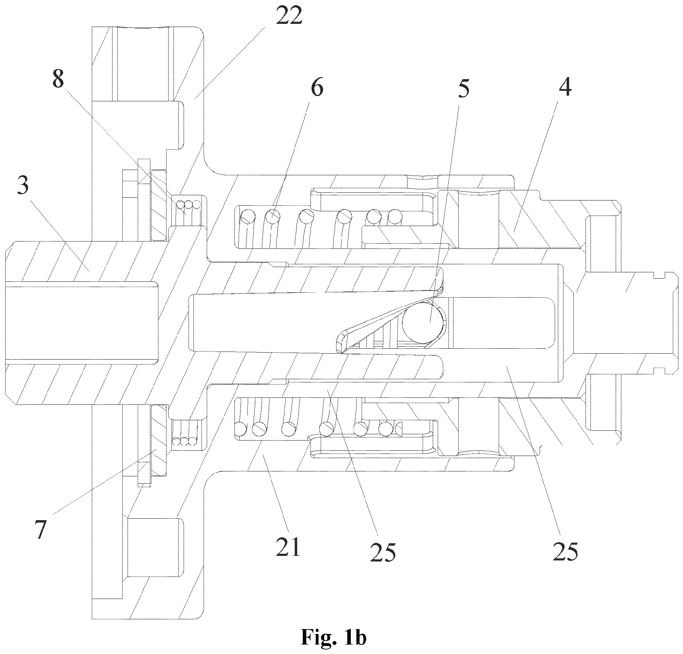

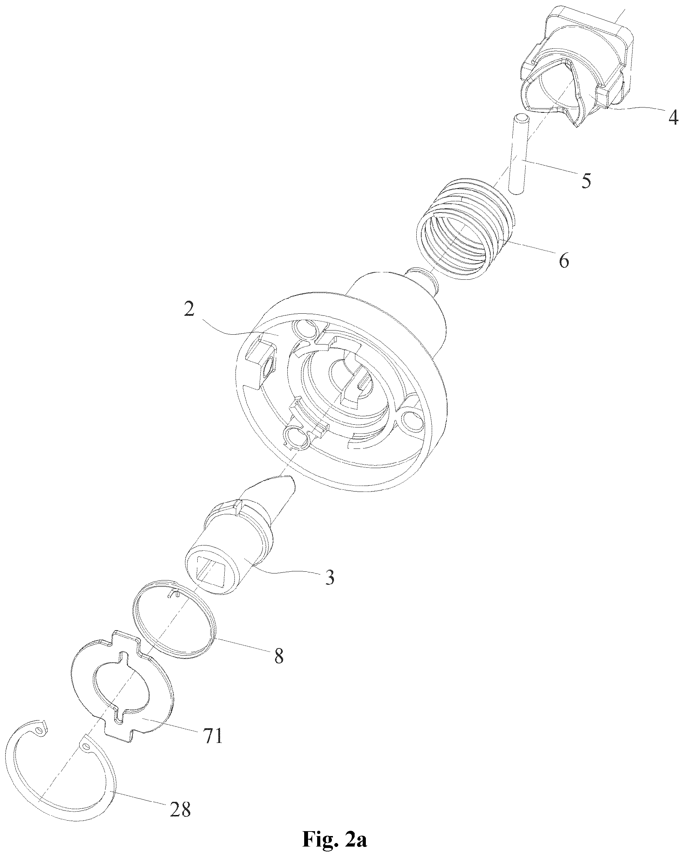

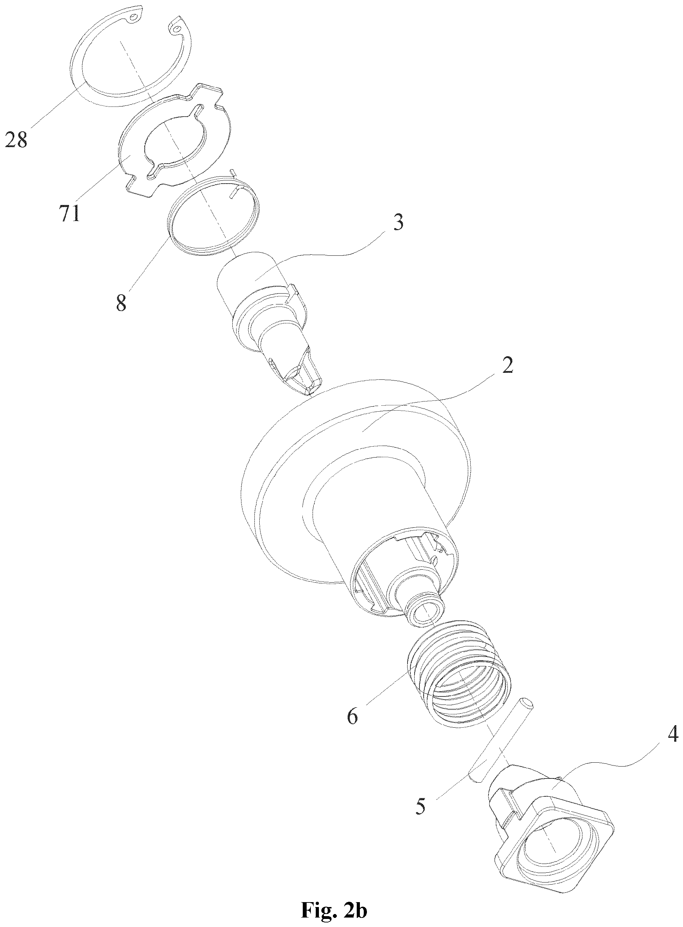

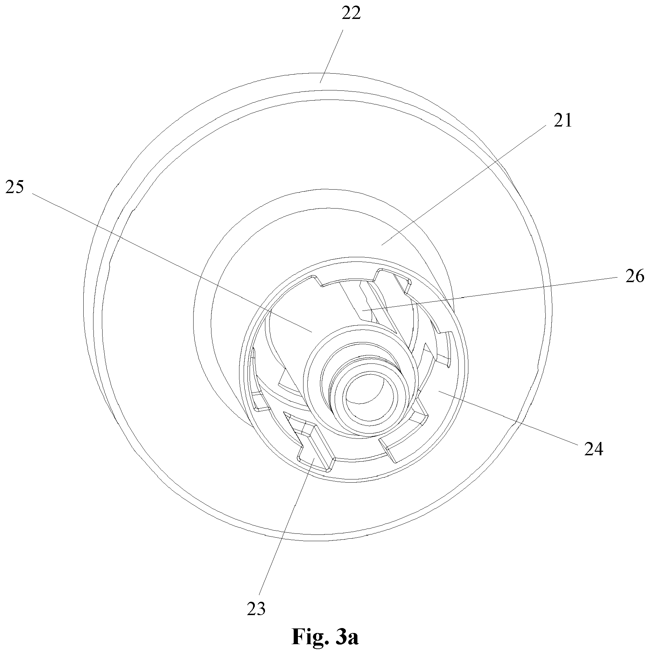

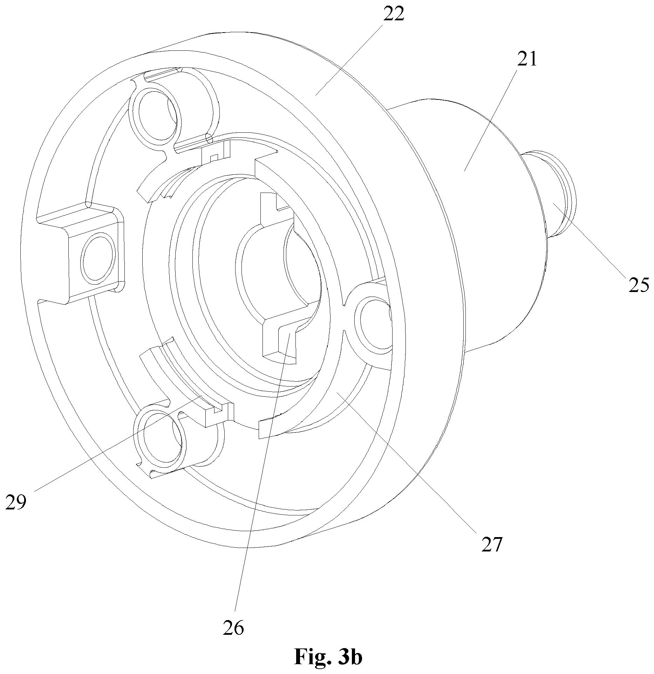

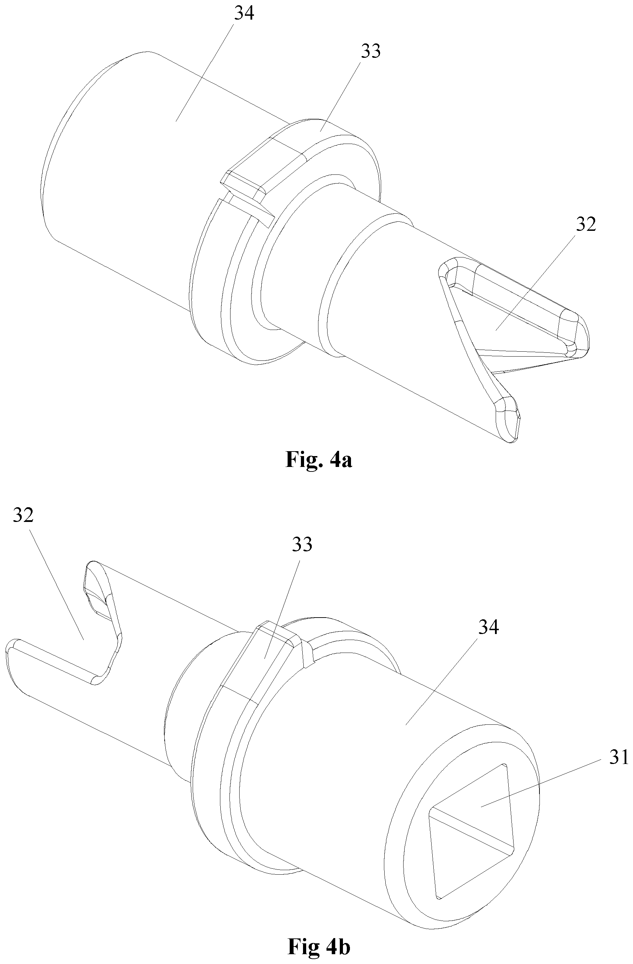

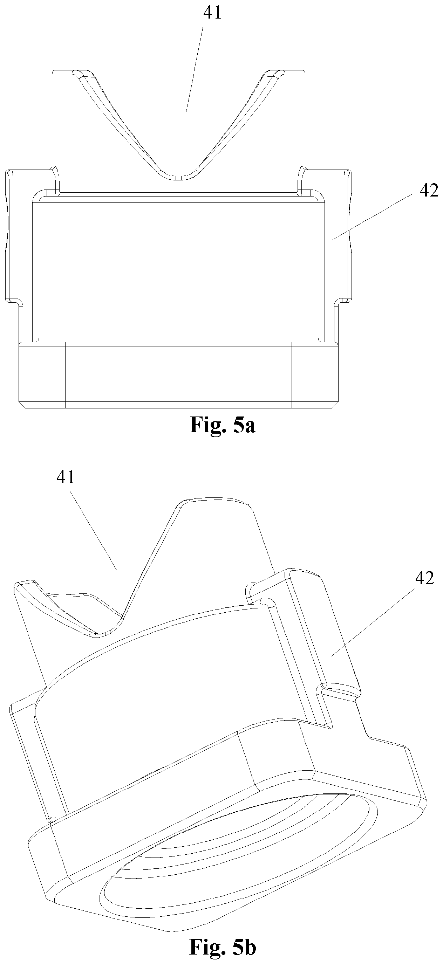

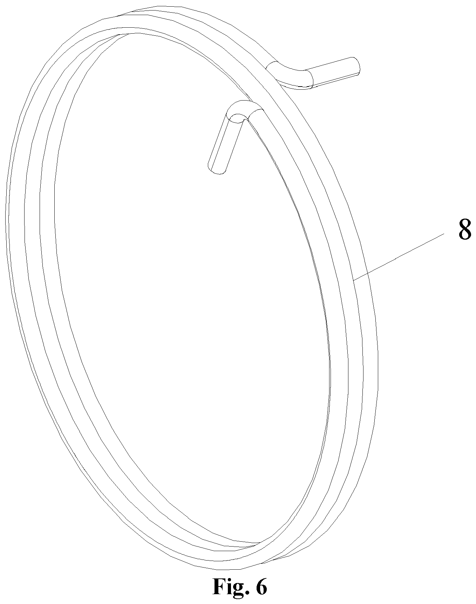

In this embodiment, a handle linkage structure is disclosed, which is disposed between the handle and the square core of the door lock to connect the two together during usage. Here, Figs. 1a and 1b illustrate the structure of two cross-sections of the handle linkage structure, the two cross-sections are arranged along the center of the handle linkage structure and are perpendicular to each other; Figs. 2a and 2b illustrate the exploded structure of the handle linkage structure at two different view angles; Figs. 3a and 3b illustrate the structure of the holder in the handle linkage structure at two different view angles; Figs. 4a and 4b illustrate the structure of the first connecting part in the handle linkage structure at two different view angles; Figs. 5a and 5b illustrate the structure of the second connecting part in the handle linkage structure at two different view angles; and Fig. 6 illustrates the structure of the reset torsion spring in the handle linkage structure.

With reference to Figs. 1a to 6, the handle linkage structure includes: a holder 2, a first connecting part 3, a second connecting part 4 and a guide pin 5. Hereinafter, in order to describe the connection relationship between various components, the "inner end" and "outer end" are introduced, where the "inner end" refers to the end of the handle linkage structure close to the square core, and the "outer end" refers to the end of the handle linkage structure close to the handle.

The holder 2 has an outer end provided with first and second limiting parts 21 and 25 of a hollow cylindrical shapes, for limiting the first connecting part 3, the second connecting part 4 and the guide pin 5. The diameter of the first limiting part 21 is larger than that of the second limiting part 25, and the first limiting part 21 is provided on the outer periphery of the second limiting part 25. The inner end of the holder 2 has a hollow cylindrical installation part 22. The installation part 22 has a diameter larger than the diameter of the first limiting part 21, and can function to fix the handle linkage structure on the door lock. The inner ends of the first limiting part 21 and the second limiting part 25 are fixedly connected to the installation part 22. In this embodiment, the three parts have an integrated structure, which facilitates production. Two second sliding grooves 26 along the axial direction are symmetrically provided on the inner wall of the second limiting part 25. The guide pin 5 is inserted into the second sliding grooves 26 and can slide along the axial direction.

The first connecting part 3 is rotatably disposed in the second limiting part 25 around the axial direction. Its inner end side is provided with a square core hole 31, and its outer end is hollow cylindrical and provided with two first connecting grooves 32. Here, one end of the square core hole 31 of the first connecting part 3 is disposed outside the holder 2 and can be connected to the square core during usage; one end of the first connecting groove 32 of the first connecting part 3 is disposed in the second limiting part 25, to be fitted with the second connecting part 4 and the guide pin 5. A ring-shaped abutment 33 is provided in the middle part of the first connecting part 3 to abut against the end surface of the second limiting part 25, thereby preventing the first connecting part 3 from moving toward the distal end.

The groove wall at one side of the first connecting groove 32 has an inclined surface. Since the outer end of the first connecting part 3 is hollow cylindrical in this embodiment, the groove wall on this side of the first connecting groove 32 has a spiral inclined surface around the axial direction provided on the hollow cylindrical wall; the groove wall at the other side of the first connecting groove 32 has a plane surface parallel to the axial direction. The two first connecting grooves 32 are symmetrically arranged along the circumferential direction of the first connecting part 3, so that the side walls of the guide pin 5 radially penetrated therein can abut against the two spiral inclined surfaces at the same time. The width of one end of the first connecting groove 32 close to the square core hole 31 is smaller than the width of the end thereof away from the square core hole 31.

The inner end of the second connecting part 4 has a hollow cylindrical structure and is sleeved on the outer end of the second limiting part 25 so that the second connecting part 4 and the first connecting part 3 can rotate relative to each other. The outer end of the second connecting part 4 is configured to connect with the handle 1. For example, the handle 1 can be fixedly connected to the second connecting part 4. At this time, the second connecting part 4 can move simultaneously with the handle 1. For example, Pushing the handle 1 toward the inner end, pulling the handle 1 toward the outer end, or turning the handle 1 clockwise or counterclockwise can make the second connecting part 4 move in the same way.

The guide pin 5 is a solid cylinder, which radially penetrates the first connecting part 3 and the second limiting part 25 and is located in the two first connecting grooves 32 and the two second sliding grooves 26. The side surface thereof abuts against the spiral inclined surfaces of the two first connecting grooves 32 and the inner end of the second connecting part 4.

During usage, the second connecting part 4 is pushed toward the inner end to cause the guide pin 5 to move toward the inner end along the second sliding groove 26. Since the side surface of the guide pin 5 abuts against the spiral inclined surface of the first connecting groove 32, and the guide pin 5 cannot rotate around the axial direction, the first connecting part 3 will rotate under the push of the guide pin 5. At the same time, the inner end of the first connecting part 3 can drive the square core of the lock to rotate together. By adjusting the inclination direction and angle of the above-mentioned spiral inclined surface, the rotation direction and angle of the first connecting part 3 can be adjusted to facilitate the control of the preset direction and angle of the square core rotation and realize the function of retracting the lock tongue.

In the initial state, i.e., before unlocking, the guide pin 5 is positioned at the distal end of the first connecting groove 32. Therefore, when the handle at one side of the door lock is pushed toward the inner end after the handle linkage structures are installed on both sides of the door lock, the handle linkage structure on this side moves and drives the square core to rotate, and the first connecting part 3 at the other side, though rotating simultaneously, does not cause the guide pin 5 to move in the axial direction in the first connecting groove 32, nor drive the second connecting part 4 and the handle 1 at the other side to move simultaneously, since the width of the distal end of the first connecting groove 32 is larger than the diameter of the guide pin 5, Therefore, the force required to unlock the lock can be reduced, facilitating unlocking by the user.

The groove wall at one side of the first connecting groove 32 has an inclined surface, and the groove wall at the other side has a plane surface parallel to the axial direction, which enables unlocking and reduces the force required for unlocking. In another embodiment, the groove walls on both sides of the first connecting groove 32 can also be set as two inclined surfaces, but it is necessary to ensure that the width of the end of the first connecting groove 32 close to the square core hole 31 is not larger than the width of the end away from the square core hole 31, i.e., the width of the opening of the groove is not less than the width of the bottom of the groove. At this time, when unlocking, pushing the second connecting part 4 can drive the first connecting part 3 to rotate. When the first connecting part 3 at the other side of the door lock is rotated, the guide pin 5 does not move or moves toward the one side close to the square core. It will not drive the second connecting part 4 and the handle 1 on this side to move simultaneously, so the force required to unlock the door can also be reduced, as compared to the conventional door lock.

In addition, in another embodiment, the distal end of the first connecting part 3 can also be disposed in a solid cylindrical shape. Correspondingly, the proximal end of the second connecting part 4 can be disposed in a hollow cylindrical shape and sleeved on the outer periphery of the connecting part 3 or the second limiting part 25, thereby also realizing relative rotation of the first connecting part 3 and the second connecting part 4.

In addition, in another embodiment, the number of the second sliding groove 26 and the first connecting groove 32 can also be set to one, and meanwhile, the distal end of the first connecting part 3 may be set to have a solid cylindrical shape. Correspondingly, the first connecting groove 32 has only one side opening and one top opening. At this time, one end of the guide pin 5 is disposed in the second sliding groove 26, and the other end abuts against the side end wall of the first connecting groove 32 close to the axial center. The side wall of the guide pin 5 also abuts against the groove wall of the first connecting groove 32 that has the inclined surface. According to this structure, when the second connecting part 4 is pushed inward, the guide pin 5 can also drive the first connecting part 3 to rotate.

In the above embodiment, unlocking is realized by pushing the second connecting part 4 toward the inner end. In another embodiment, unlocking can also be realized by rotating the second connecting part 4 clockwise or counterclockwise. Specifically, two V-shaped second connecting grooves 41 are symmetrically provided at the inner end of the second connecting part 4 along the circumferential direction thereof. The groove openings of the second connecting grooves 41 face the first connecting part 3, while the groove wall of the first connecting groove 32 abuts against the side surface of the guide pin 5. In the initial state, the guide pin 5 is at the bottom of the second connecting groove 41. When the second connecting part 4 is rotated clockwise or counterclockwise, the rotation of the guide pin 5 around the axial direction is restricted, so the inclined shaped groove wall the second connecting groove 41 can push the guide pin 5 to move toward the inner end to unlock; when the second connecting part 4 is pushed toward the inner end, the bottom end of the second connecting groove 41 can directly push the guide pin 5 to move toward the inner end to unlock. Undoubtedly, when the number of the above-mentioned second sliding groove 26 and the first connecting groove 32 is also set to one, the number of the second connecting groove 41 can also be set to one, and at this time, the first connecting part 3 can also be rotated clockwise or counterclockwise to unlock.

In addition, in this embodiment, the inner wall of the first limiting part 21 is further symmetrically provided with two first sliding grooves 23. The first sliding grooves 23 and the second sliding grooves 26 are disposed to face each other for accommodating the end portion of the guide pin 5, thereby making the movement of the guide pin 5 in the holder 2 more stable.

In addition, in this embodiment, the inner wall of the first limiting part 21 is further symmetrically provided with two T-shaped first limiting grooves 24. The heads of the first limiting grooves 24 are arranged along the circumferential direction thereof, and the tails thereof are parallel to the axial direction. The first limiting grooves 24 are groove bodies that are recessed toward the inner wall of the first limiting part 21. At the same time, two limiting bosses 42 are symmetrically provided on the side surface of the second connecting part 4. In the initial state, the limiting bosses 42 are at the heads of the first limiting grooves 24 and the inner ends thereof face the tails of the first limiting grooves 24. At this time, the second connecting part 4 is pushed toward the inner end, the limiting bosses 42 enter into the tails of the first limiting grooves 24, and then the rotation of the second connecting part 4 around the axial direction is restricted by the tails of the first limiting grooves 24. In the initial state, the second connecting part 4 are rotated clockwise or counterclockwise. At this time, the movement of the second connecting part 4 toward the inner end is restricted by the heads of the first limiting grooves 24. In other words, for a door lock using this handle linkage structure, when the handle is pushed toward the inner end to unlock, the handle cannot rotate any further; when the handle is rotated clockwise or counterclockwise to unlock, the handle cannot move inward any further, thereby ensuring a more stable process of unlocking.

Further, a reset spring 6 can be sleeved on the second limiting part 25. The outer end of the reset spring 6 abuts against the side surface of the guide pin 5, and the inner end of the reset spring 6 is fixedly disposed. For example, it can abut against the inner end surface of the first limiting part 25. When the second connecting part 4 is rotated or pushed toward the inner end to unlock, the guide pin 5 moves toward the inner end and compresses the reset spring 6 while unlocking. After the unlocking is completed and the second connecting part 4 is released from external force, the reset spring 6 rebounds to allow the guide pin 5 to push the second connecting part 4 to reset to the initial position.

In addition, in this embodiment, a first sealing plate 71 is provided at one side of the inner end of the holder 2, and a circular installation hole is provided in the middle part of the first sealing plate 71 to limit the movement of the first connecting part 3 toward the inner end. A ring-shaped engagement base 27 is provided in the installation part 22. The engagement base 27 is provided with engagement grooves for accommodating the two ends of the first sealing plate 71. Further, a ring-shaped engagement groove 29 is provided on the inner wall of the engagement base 27. An elastic retaining ring 28 for hole is provided in the ring-shaped groove 29. One side of the first sealing plate 71 abuts against the ring-shaped abutment 33, and the other side of the first sealing plate 71 abuts against the elastic retaining ring 28 for hole, thereby restricting the movement of the first connecting part 3 toward the inner end. The inner end side of the first connecting part 3 is provided with a square core connecting part 34 that penetrates the circular installation hole. The square core connecting part 34 is in a solid cylindrical shape, and the inner end side thereof is provided with the above-mentioned square core hole 31.

Further, a reset torsion spring 8 is sleeved on the ring-shaped abutment 33, and a limiting groove or a limiting hole is provided on the ring-shaped abutment 33 for fixing a torsion arm of the reset torsion spring 8. A limit groove or a limiting hole is also provided on the first sealing plate 71 for fixing the other torsion arm of the reset torsion spring 8. With reference to Figs. 1a, 2b and 4a together, one torsion arm of the reset torsion spring 8 is inserted into the limiting groove on the ring-shaped abutment 33, and the other torsion arm of the reset torsion spring 8 is inserted into the limiting groove provided on the first sealing plate 71. When the first connecting part 3 rotates clockwise or counterclockwise, the reset torsion spring 8 is compressed to drive the first connecting part 3 to rotate counterclockwise or clockwise. In other words, after the first connecting part 3 is rotated and the unlocking is completed, the reset torsion spring 8 can drive the first connecting part 3 to reset to the initial position to facilitate subsequent unlocking. In addition, the other torsion arm of the reset torsion spring 8 can also be fixed on the inner wall of the holder 2, which can also achieve the above-mentioned restoring effect. Of course, in other embodiments, the reset torsion spring 8 can also be replaced with a mechanism in the lock that can reset the square core may be used to indirectly restore the first connecting part 3 to the initial position.

In addition, when the groove walls on both sides of the first connecting groove 32 have parallel inclined surfaces, the reset spring 6 can also drive the first connecting part 3 to reset to the initial position when pushing the guide pin 5 to move toward the outer end. Therefore, when the groove walls on both sides of the first connecting groove 32 have parallel inclined surfaces, only one of the reset spring 6 and the reset torsion spring 8 may be provided, or only a mechanism in the lock that can restore the square core may be used to indirectly restore the first connecting part 3 and the second connecting part 4 to the initial position.

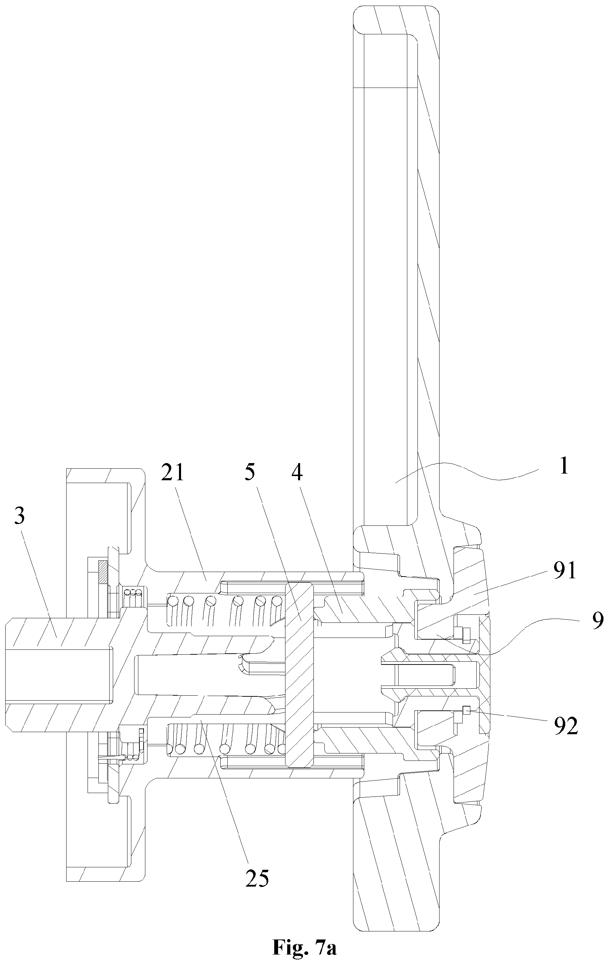

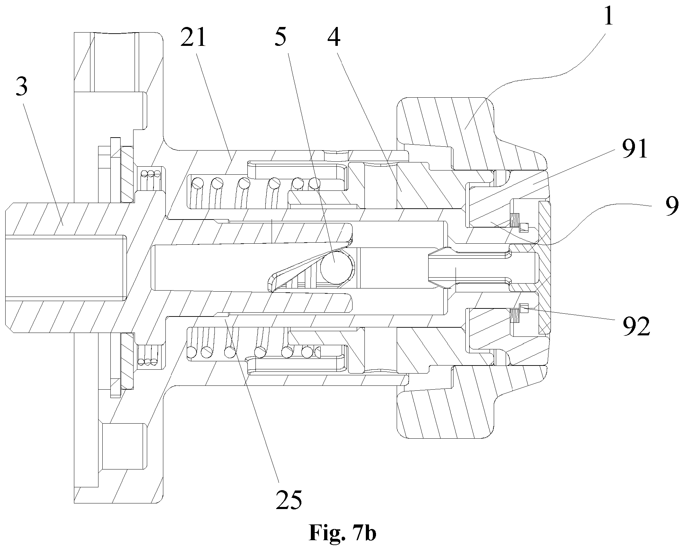

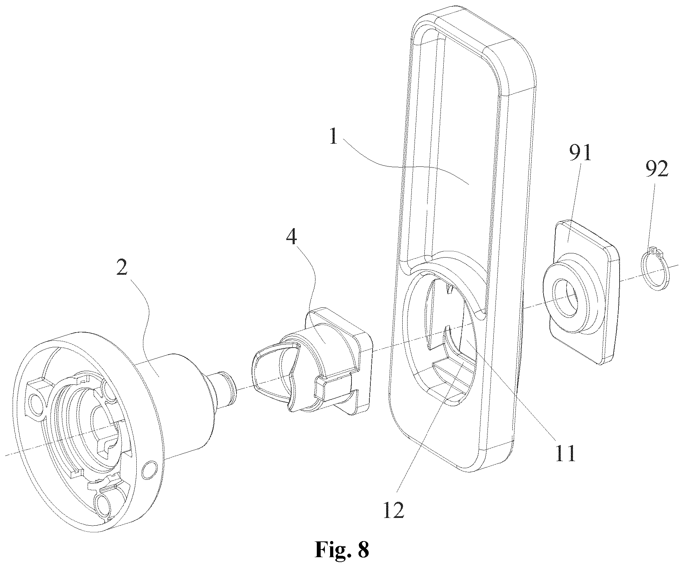

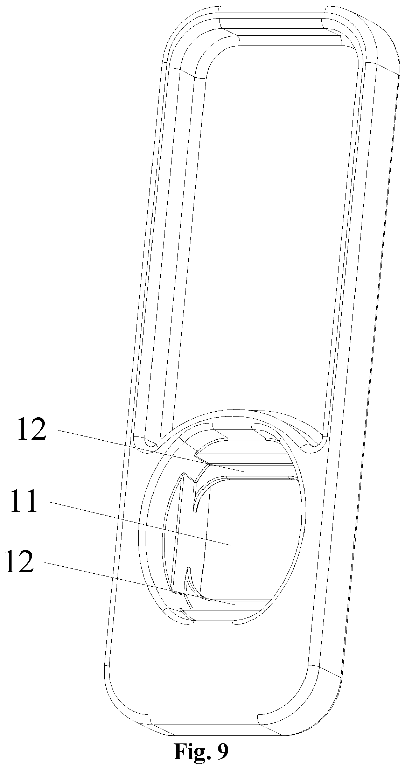

In this embodiment, a handle assembly is further disclosed, which adopts the handle linkage structure as described above. Figs. 7a and 7b illustrate two cross-sectional views of the handle assembly, the two cross-sections are arranged along the center of the handle assembly and are perpendicular to each other. Fig. 8 illustrates the exploded structure of the handle assembly. In order to illustrate more details, the first connecting part 3, the guide pin 5, the reset spring 6, the first sealing plate 71, the reset torsion spring 8 and the elastic retaining ring 28 for hole are omitted in this figure. Fig. 9 illustrates the structure of the handle in the handle assembly.

With reference to Figs. 7a to 9, the handle assembly includes the handle linkage structure as described above and a handle 1. One end of the handle 1 (the lower end in Fig. 7a) is sleeved on the outer end side of the second limiting part 25, abuts against the outer end surface of the second connecting part 4 and can swing around the radial direction of the second limiting part 25. When the other end (the upper end in Fig. 7a) of the handle 1 is pushed toward the inner end, or when the other end (the upper end in Fig. 7a) of the handle 1 is pulled toward the outer end, the second connecting part 4 can be slid toward inner end side to unlock.

Specifically, a handle limiting part 9 sleeved on the outer end side of the second limiting part 25 is provided at the lower end of the handle 1. The handle limiting part 9 includes a stopper 91 and an elastic retaining ring 92 for shaft. The stopper 91 is rotatably provided on the second limiting part 25 in the middle, and its outer periphery is provided in the assembly hole 11 at the lower end of the handle 1. The outer shapes of the stopper 91 and the assembly hole 11 are rectangular, and the stopper 91 can rotate around the axial direction synchronously with the handle 1. The elastic retaining ring 92 for shaft is provided on the side of the stopper 91 close to the outer end to restrict the movement of the stopper 91 toward the outer end. The upper and lower sides of the inside of the assembly hole 11 at the lower end of the handle 1 are provided with protruding parts 12 extending to a position between the outer end surface of the second connecting part 4 and the stopper 91. The side surfaces of the protruding parts 12 abut against the outer end surface of the second connecting part 4. Therefore, when the upper end of the handle 1 is pushed or pulled, the handle 1 can swing around the radial direction of the second limiting part 25, and at the same time, the protruding part 12 can move the second connecting part 4 toward the inner end to unlock. The stopper 91 also serves as a fulcrum when the handle 1 swings around the radial direction, and can limit the movement of the handle 1 toward the outer end, so that the handle 1 can only rotate around the axial direction and swing around the radial direction.

In addition, one end of the handle 1 can also be sleeved on the outer end side of the first limiting part 21 and abut against the outer end surface of the second connecting part 4 while swinging around the radial direction of the first limiting part 21. According to this structure, when the other end of the handle 1 is pushed or pulled, the second connecting part 4 can also be moved toward the inner end side to realize unlocking.

In this embodiment, the other end of the second connecting part 4 has a rectangular cross-section and is disposed in the above-mentioned assembly hole 11. Therefore, when the handle 1 is rotated, the second connecting part 4 can also be driven to rotate to realize unlocking. It should be noted that although the cross-section of the other end of the second connecting part 4, and the outer shapes of the assembly hole 11 and the stopper 91 are all rectangular in this embodiment, they can also be set to other non-circular structures in other embodiments, which can also achieve the above function.

### Embodiment 2

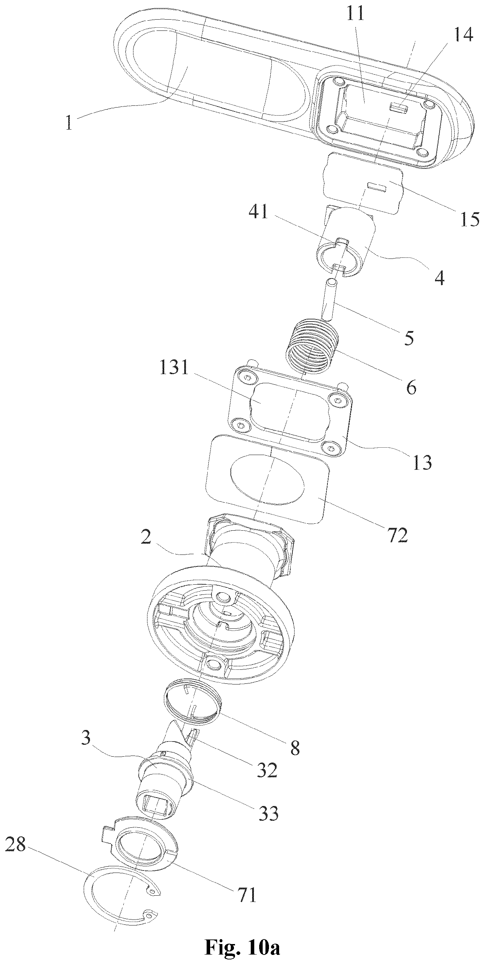

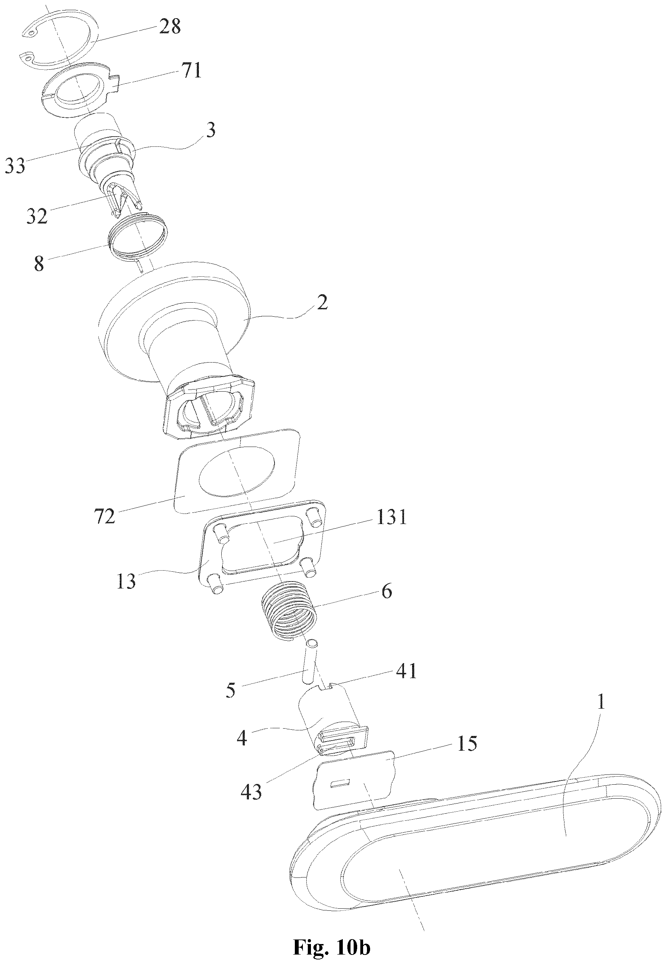

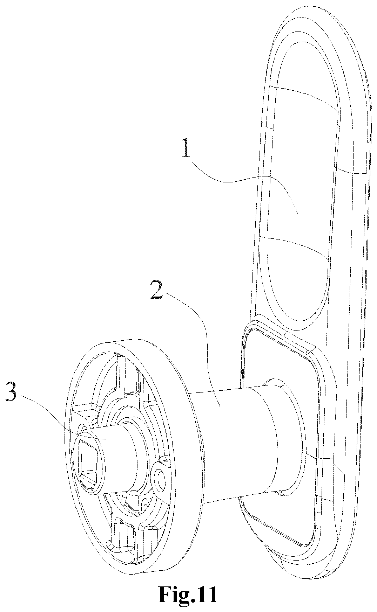

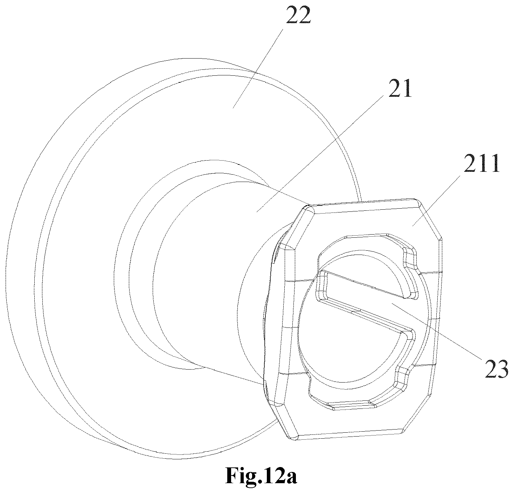

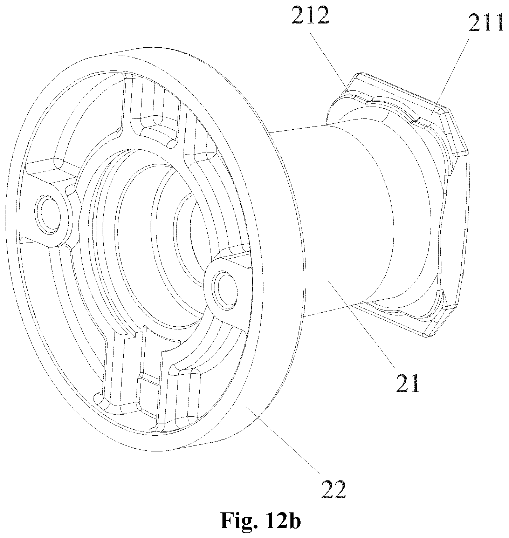

In this embodiment, another handle assembly is disclosed, which includes another handle linkage structure not exactly the same as the handle linkage structure in Embodiment 1. Figs. 10a and 10b illustrate the exploded structure of the handle assembly at two different view angles; Fig. 11 illustrates the three-dimensional structure of the handle assembly; and Figs. 12a and 12b illustrate the structure of the holder in the handle assembly at two different view angles.

With reference to Figs. 10a to 12b, the handle assembly includes a handle and a handle linkage structure. The handle linkage structure includes: a holder 2, a first connecting part 3, a second connecting part 4 and a guide pin 5. Hereinafter, in order to describe the connection relationship between various components, the "inner end" and "outer end" are introduced, where the "inner end" refers to the end of the handle linkage structure close to the square core, and the "outer end" refers to the end of the handle linkage structure close to the handle.

The holder 2 has an outer end provided with a first limiting part 21 of a hollow cylindrical shape, for limiting the first connecting part 3, the second connecting part 4 and the guide pin 5. The inner end of the holder 2 has a hollow cylindrical installation part 22. The installation part 22 has a diameter larger than the diameter of the first limiting part 21, and can function to fix the handle linkage structure on the door lock. The inner end of the first limiting part 21 is fixedly connected to the installation part 22. In this embodiment, the two parts have an integrated structure, which facilitates production. Two first sliding grooves 23 along the axial direction are symmetrically provided on the inner wall of the first limiting part 21. The both ends of the guide pin 5 are inserted into the first sliding grooves 23 and can slide along the axial direction.

The first connecting part 3 is rotatably disposed on the holder 2 around the axial direction. Its inner end side is provided with a square core hole 31, and its outer end is hollow cylindrical and provided with two first connecting grooves 32. Here, one end of the square core hole 31 of the first connecting part 3 is disposed outside the holder 2 and can be connected to the square core during usage; one end of the first connecting groove 32 of the first connecting part 3 is disposed in the first limiting part 21, to be fitted with the second connecting part 4 and the guide pin 5. A ring-shaped abutment 33 is provided in the middle part of the first connecting part 3 to abut against the end surface of the holder 2, thereby preventing the first connecting part 3 from moving toward the distal end.

The groove wall at one side of the first connecting groove 32 has an inclined surface. Since the outer end of the first connecting part 3 is hollow cylindrical in this embodiment, the groove wall on this side of the first connecting groove 32 has a spiral inclined surface around the axial direction provided on the hollow cylindrical wall; the groove wall at the other side of the first connecting groove 32 has a plane surface parallel to the axial direction. The two first connecting grooves 32 are symmetrically arranged along the circumferential direction of the first connecting part 3, so that the side walls of the guide pin 5 radially penetrated therein can abut against the two spiral inclined surfaces at the same time. The width of one end of the first connecting groove 32 close to the square core hole 31 is smaller than the width of the end thereof away from the square core hole 31.

The inner end of the second connecting part 4 has a hollow cylindrical structure and is sleeved on the outer end of the first connecting part 3 so that the second connecting part 4 and the first connecting part 3 can rotate relative to each other. The outer end of the second connecting part 4 is configured to connect with the handle 1. For example, the handle 1 can be fixedly connected to the second connecting part 4. At this time, the second connecting part 4 can move simultaneously with the handle 1. For example, Pushing the handle 1 toward the inner end, pulling the handle 1 toward the outer end, or turning the handle 1 clockwise or counterclockwise can make the second connecting part 4 move in the same way.

The guide pin 5 is a solid cylinder, which radially penetrates the first connecting part 3 and is located in the two first connecting grooves 32 and in the two first sliding grooves 23. The side surfaces thereof abut against the spiral inclined surfaces of the two first connecting grooves 32 and the inner end of the second connecting part 4.

During usage, the second connecting part 4 is pushed toward the inner end to cause the guide pin 5 to move toward the inner end along the first sliding groove 23. Since the side surface of the guide pin 5 abuts against the spiral inclined surface of the first connecting groove 32, and the guide pin 5 cannot rotate around the axial direction, the first connecting part 3 will rotate under the push of the guide pin 5. At the same time, the inner end of the first connecting part 3 can drive the square core of the lock to rotate together. By adjusting the inclination direction and angle of the above-mentioned spiral inclined surface, the rotation direction and angle of the first connecting part 3 can be adjusted to facilitate the control of the preset direction and angle of the square core rotation and realize the function of retracting the lock tongue.

In the initial state, i.e., before unlocking, the guide pin 5 is positioned at the distal end of the first connecting groove 32. Therefore, when the handle at one side of the door lock is pushed toward the inner end after the handle linkage structures are installed on both sides of the door lock, the handle linkage structure on this side moves and drives the square core to rotate and the first connecting part 3 at the other side, though rotating simultaneously, does not cause the guide pin 5 to move in the axial direction in the first connecting groove 32, nor drive the second connecting part 4 and the handle 1 at the other side to move simultaneously since the width of the distal end of the first connecting groove 32 is larger than the diameter of the guide pin 5, Therefore. the force required to unlock the lock can be reduced, facilitating unlocking by the user.

The groove wall at one side of the first connecting groove 32 has an inclined surface, and the groove wall at the other side has a plane surface parallel to the axial direction, which enables unlocking and reduces the force required for unlocking. In another embodiment, the groove walls on both sides of the first connecting groove 32 can also be set as two inclined surfaces, but it is necessary to ensure that the width of the end of the first connecting groove 32 close to the square core hole 31 is not larger than the width of the end away from the square core hole 31, i.e., the width of the opening of the groove is not less than the width of the bottom of the groove. At this time, when unlocking, pushing the second connecting part 4 can drive the first connecting part 3 to rotate. When the first connecting part 3 at the other side of the door lock is rotated, the guide pin 5 does not move or moves toward one side close to the square core. It will not drive the second connecting part 4 and the handle 1 on this side to move simultaneously, so the force required to unlock the door can also be reduced, as compared to the conventional door lock.

In addition, in another embodiment, the number of the first sliding groove 23 and the first connecting groove 32 can also be set to one, and meanwhile, the distal end of the first connecting part 3 may be set to have a solid cylindrical shape. Correspondingly, the first connecting groove 32 has only one side opening and one top opening. At this time, one end of the guide pin 5 is disposed in the first sliding groove 23, and the other end abuts against the side end wall of the first connecting groove 32 close to the axial center. The side wall of the guide pin 5 also abuts against the groove wall of the first connecting groove 32 that has the inclined surface. According to this structure, when the second connecting part 4 is pushed inward, the guide pin 5 can also drive the first connecting part 3 to rotate.

Further, in this embodiment, two second connecting grooves 41 are symmetrically provided at the inner end of the second connecting part 4 along the circumferential direction thereof, to accommodate the guide pin 5. The groove openings of the second connecting grooves 41 face the first connecting part 3, while the groove wall of the second connecting groove 41 abuts against the side surface of the guide pin 5. The second connecting groove 41 can strengthen the tightness of the connection between the second connecting part 4 and the guide pin 5, and prevent the second connecting part 4 from rotating around the axial direction during usage to a certain extent.

In addition, a reset spring 6 is sleeved on the outer periphery of the first connecting part 3. The outer end of the reset spring 6 abuts against the side surface of the guide pin 5, and the inner end of the reset spring 6 is fixedly disposed. For example, it can abut against the inner end surface of the first limiting part 21. When the second connecting part 4 is pushed toward the inner end to unlock, the guide pin 5 moves toward the inner end and compresses the reset spring 6 while unlocking. After the unlocking is completed and the second connecting part 4 is released from external force, the reset spring 6 rebounds to allow the guide pin 5 to push the second connecting part 4 to reset to the initial position.

The same as the Embodiment 1, a first sealing plate 71, a reset torsion spring 8, and an elastic retaining ring 28 for hole are also provided on the inner end side of the holder 2. The connection method with the holder 2 and the first connecting part 3 is the same as that in Embodiment 1, the description on it will be omitted.

In addition, when the groove walls on both sides of the first connecting groove 32 have parallel inclined surfaces, the reset spring 6 can also drive the first connecting part 3 to reset to the initial state when pushing the guide pin 5 to move toward the outer end. Therefore, when the groove walls on both sides of the first connecting groove 32 have parallel inclined surfaces, only one of the reset spring 6 and the reset torsion spring 8 may be provided, or only a mechanism in the lock that can restore the square core may be used to indirectly restore the first connecting part 3 and the second connecting part 4 to the initial state.

One end of the handle 1 (the right end in Fig. 10a) in this embodiment is sleeved on the outer end side of the first limiting part 21, abuts against the outer end surface of the second connecting part 4 and can swing around the radial direction of the first connecting part 3. When the other end (the left end in Fig. 10a) of the handle 1 is pushed toward the inner end, or when the other end (the left end in Fig. 10a) of the handle 1 is pulled toward the outer end, the second connecting part 4 can be slid toward inner end side to unlock.

A limiting abutment 211 is provided on the outer periphery of the outer side end of the first limiting part 21, and the handle 1 is provided with an assembly hole 11 that can accommodate the outer end of the second connecting part 4 and the first limiting part 21. The assembly hole 11 is covered with a limiting baffle 13. The limiting baffle 13 is provided with screws on its outer periphery, so that the limiting baffle 13 can be fixedly connected to the handle 1. Meanwhile, the limiting baffle 13 is sleeved on the first limiting part 21, and the limiting baffle 13 is provided with a limiting hole 131 having a width no less than the width of the limiting abutment 211 and a length smaller than the length of the limiting abutment 211. With reference to Figs. 10a and 10b, when the handle 1 and the handle connection structure are assembled together, the outer end of the second connecting part 4 and the limiting abutment 211 are both located in the assembly hole 11. Since the length of the limit abutment 211 is greater than the length of the limiting hole 131, when assembling the limit abutment 211, one end of the limit abutment 211 is first inserted into the limiting hole 131 and is moved toward this end, so that the other end of the limiting block 211 is in the limiting hole 131. At this time, the limiting abutment 211 can be passed through the limiting hole 131 as a whole, and then the limiting baffle 13 can be moved to be sleeved on the first limiting part 21. Then, the limiting baffle 13 is fixed on the handle 1 through screws, so that the limiting abutment 211 is restricted in the assembly hole 11. In other words, at this time, one end of the handle 1 is sleeved on the first limiting part 21. Both the limiting abutment 2 11 and the assembly hole 1 1 are non-circular, so after the handle 1 is sleeved on the first limiting part 2 1, there will be no rotation around the axial direction.

In this embodiment, a limiting groove 43 is provided on the outer end surface of the second connecting part 4, and a limiting block 14 extending into the limiting groove 43 is provided on the bottom surface of the assembly hole 11. The limiting groove 43 and the limiting block 14 are both elongated, and their longitudinal directions are parallel to the longitudinal direction of the handle 1, which ensures that the handle 1 can swing around the radial direction of the first connecting part 3 while not occurring the rotation around the axial direction. In addition, the limiting block 14 can also function to limit the second connecting part 4. During usage, the second connecting part 4 will move in the axial direction at the outer periphery of the limiting block 14 and will not move in the radial direction.

In addition, in this embodiment, an auxiliary plate 15 is further provided between the second connecting part 4 and the bottom surface of the assembly hole 11. The length of the auxiliary plate 15 is greater than the length of the second connecting part 4 along the longitudinal direction of the handle 1. The auxiliary plate 15 is sleeved on the limiting block 14, with its two side surfaces respectively abutting against the end surface of the second connecting part 4 and the bottom surface of the assembly hole 11. The hole in the middle of the auxiliary plate 15 is longer than the length of the limiting block 14. When the handle 1 is pushed or pulled to swing around the radial direction of the first connecting part 3, the auxiliary plate 15 can move to a side close to the holder 2, so that the force-bearing area of the second connecting part 4 is larger, thereby moving stably toward a side close to the holder 2 along the axial direction and further realizing unlocking.

Referring to FIG. 12b, a positioning abutment 212 having a shape corresponding to the limiting hole 131 is provided at one side of the limiting abutment 211 away from the handle 1. Therefore, after the handle 1 and the handle linkage structure are assembled, the second connecting part 4 moves toward the handle 1 side under the force of the reset spring 6, which can indirectly drive the limiting baffle 13 to move toward that side. At this time, the limiting hole 131 can be sleeved on the positioning abutment 212. Since the limiting hole 131 is non-circular, this structure can not only limit the rotation of the handle 1, but also improve the stability of the connection structure between the handle 1 and the handle connection structure.

In addition, in this embodiment, the outer end of the first limiting part 21 is arc-shaped, i.e., the outer end surface of the limiting abutment 211 is arc-shaped, and its middle position is closer to the bottom surface of the assembly hole 11 than the outer periphery is. Under this structure, the handle 1 can realize a swing connection with the holder 2 by the assembly hole 11 having a smaller depth.

In addition, the first limiting part 21 has a tapered hollow cylindrical structure, and the diameter of one end close to the handle 1 is smaller than the diameter of the other end, making it easier to swing the handle 1 and improve the stability of the second connecting part 4 inside it. In addition, in this embodiment, a second sealing plate 72 is further sleeved on the first limiting part 21. The second sealing plate 72 is a ring-shaped plate, and the middle part has a circular hole with the same cross-section as the first limiting part 21. One side thereof is provided with a slit to form an opening, which can be opened and sleeved on the first limiting part 21 during usage, thereby blocking the limiting baffle 13. In addition, the outer shape of the second sealing plate 72 can also be set to be the same as the shape of the assembly hole 11. When assembling the handle assembly, the second sealing plate 72 can be engaged in the assembly hole 11 to make the appearance of the handle 1 more unified and simplified.

According to some embodiments of the present disclosure, the following items of handle linkage structures and handle assemblies having the same are also provided.
(1) A handle linkage structure, comprising:
   a holder having a first limiting part of a hollow cylindrical shape at one end;
   a first connecting part rotatably disposed on the holder around an axial direction and having one end provided with a square core hole and the other end inserted into the holder, wherein the first connecting part has an outer periphery provided with a first connecting groove having a groove wall that has an inclined surface at one side thereof, and wherein the first connecting groove has a width at one end close to the square core hole smaller than that at the other end away from the square core hole;
   a second connecting part having, at one end, a hollow cylindrical structure and sleeved on the other end of the first connecting part; and
   a guide pin slidably disposed in the first limiting part along the axial direction and having a side surface abutting against an end of the second connecting part close to the holder and the inclined surface.
(2) The handle linkage structure according to (1), wherein:
   the first limiting part has an inner wall provided with a first sliding groove along the axial direction that is configured to accommodate an end of the guide pin.
(3) The handle linkage structure according to (2), wherein:
   the outer periphery of the first connecting part is symmetrically provided with two first connecting grooves along a circumferential direction; and
   the inner wall of the first limiting part is symmetrically provided with two first sliding grooves.
(4) The handle linkage structure according to (1), wherein:
   the first limiting part is further provided with a second limiting part of a hollow cylindrical shape and having a second sliding groove configured to accommodate the guide pin, and the other end of the first connecting part is inserted into the second limiting part.
(5) The handle linkage structure according to (4), wherein:
   the outer periphery of the first connecting part is symmetrically provided with two first connecting grooves along the circumferential direction thereof;
   two second sliding grooves are symmetrically provided on the second limiting part; and
   the guide pin radially penetrates the first connecting part and the second limiting part.
(6) The handle linkage structure according to (5), wherein:
   the inner wall of the first limiting part is provided with a T-shaped first limiting groove having a head disposed along the circumferential direction thereof; and
   the second connecting part has a side surface provided with a liming boss disposed at the head of the first limiting groove with one end facing a tail of the first limiting groove.
(7) The handle linkage structure according to (1), wherein:
   the first connecting part has a middle part provided with a ring-shaped abutment that abuts against an end surface of the holder.
(8) The handle linkage structure according to (7), further comprising:
   a reset torsion spring sleeved on the ring-shaped abutment and having a torsion arm at one end connected to the first connecting part and a fixed torsion arm at the other end;
   wherein when the first connecting part is rotated, the reset torsion spring is compressed to drive the first connecting part to rotate in an opposite direction.
(9) The handle linkage structure according to (7), wherein:
   the holder having one end provided with a first sealing plate into which one end of the first connecting part is inserted, and a side surface of the ring-shaped abutment abuts against first sealing plate.
(10) The handle linkage structure according to (1), further comprising:
   a reset spring provided on the outer periphery of the first connecting part, with one end fixed and the other end abutting against the guide pin to exert force on the guide pin toward the second connecting part.
(11) The handle linkage structure according to any one of (1) to (10), wherein:
   the second connecting part has one end provided with a second connecting groove having an opening facing the first connecting part, the second connecting groove abutting against the side surface of the guide pin.
(12) A handle assembly, comprising:
   the handle linkage structure according to any one of (1) to (11);
   a handle having one end sleeved on the other end of the holder, wherein the handle is configured to swing around a radial direction of the first connecting part, and is in contact with an end surface of the second connecting part.
(13) The handle assembly according to (12), wherein:
   the other end of the second connecting part has non-circular cross-section; and
   the handle is provided with an assembly hole that has a shape corresponding to the other end of the second connecting part, and the other end of the second connecting part is assembled in the assembly hole.
(14) The handle assembly according to (12), wherein:
   a limiting abutment is provided on an outer periphery of the other end of the first limiting part;
   the handle is provided with an assembly hole configured to accommodate the other end of the second connecting part, and the assembly hole is covered with a limiting baffle; and
   the limiting baffle is sleeved on the first limiting part, and is provided with a limiting hole having a width not less than that of the limiting abutment and a length smaller than that of the limiting abutment.
(15) The handle assembly according to (14), wherein:
   the second connecting part has the other end surface provided with a second limiting groove; and
   the assembly hole has a bottom surface provided with a limiting block extending into the second limiting groove.
(16) The handle assembly according to (15), wherein:
   the limiting block is sleeved with an auxiliary plate having a side surface abutting against an end surface of the second connecting part.
(17) The handle assembly according to (14), wherein:
   a positioning abutment having a shape corresponding to that of the limiting hole is provided on a side of the limiting abutment away from the handle.

According to some embodiments of the present disclosure, all or part of the following advantages can be achieved:
The handle linkage structure of the present disclosure can push the guide pin to move toward the inner end along the sliding groove through the second connecting part. As the side surface of the guide pin abuts against the inclined surface of the first connecting groove, and the guide pin cannot rotate around the axial direction, the first connecting part will rotate under the push of the guide pin. Therefore, the inner end of the first connecting part can drive the square core of the lock to rotate together, thereby realizing unlocking. Moreover, after the handle linkage structure is applied to the door lock, the handle is indirectly connected to the square core. When the handle at one side of the door lock is pushed to move the second connecting part toward the inner end to unlock, the handle at the other side of the door lock will not move at the same time, which can reduce the force required to open the lock.

In addition, when a V-shaped second connecting groove that abuts against the side surface of the guide pin is provided at the inner end of the second connecting part, the rotation of the second connecting part clockwise or counterclockwise can push the guide pin to move toward the inner end along the sliding groove, further realizing unlocking. When applied to the door lock, it can increase the number of unlocking methods and bring a better unlocking experience to users.

In addition, in the handle assembly of the present disclosure, the lower end of the handle is sleeved on the outer end of the second limiting part or the first limiting part, and can swing along the radial direction of the second limiting part or the first limiting part while the side surface abuts against the outer end of the second connecting part. When the upper end of the handle is pushed inward or pulled outward, the second connecting part can be moved toward the inner end, thereby realizing unlocking.

It is obvious to those skilled in the art that the present disclosure is not limited to the details of the above-described exemplary embodiments, and the present disclosure can be implemented in other specific forms without departing from the spirit or essential characteristics of the present disclosure. Therefore, the embodiments should be regarded as illustrative and non-restrictive from any point of view, and the scope of the present disclosure is defined by the appended claims rather than the above description. Therefore, it is intended that all variations falling within the meaning and scope of the equivalent of the claims are included in this disclosure. Any reference numerals in the claims shall not be construed as limiting the relevant claims.

### Industrial Applicability

The handle linkage structure and handle assembly of the present disclosure have solved the problem that unlocking method of the lock through the handle in the conventional locks is relatively monotonous and have reduced the force required for unlocking, which is suitable for industrial applications.

## Claims

1. A handle linkage structure, **characterized in that**, comprising:
a holder having a first limiting part of a hollow cylindrical shape at one end;
a first connecting part rotatably disposed on the holder around an axial direction and having one end provided with a square core hole and the other end inserted into the holder, wherein the first connecting part has an outer periphery provided with a first connecting groove having a groove wall that has an inclined surface at one side thereof, and wherein the first connecting groove has a width at one end close to the square core hole smaller than that at the other end away from the square core hole;
a second connecting part having, at one end, a hollow cylindrical structure and sleeved on the other end of the first connecting part; and
a guide pin slidably disposed in the first limiting part along the axial direction and having a side surface abutting against an end of the second connecting part close to the holder and the inclined surface.

2. The handle linkage structure according to claim 1, **characterized in that**, the first limiting part has an inner wall provided with a first sliding groove along the axial direction that is configured to accommodate an end of the guide pin.

3. The handle linkage structure according to claim 2, **characterized in that**:
the outer periphery of the first connecting part is symmetrically provided with two first connecting grooves along a circumferential direction, and
the inner wall of the first limiting part is symmetrically provided with two first sliding grooves.

4. The handle linkage structure according to claim 1, **characterized in that**, the first limiting part is further provided with a second limiting part of a hollow cylindrical shape and having a second sliding groove configured to accommodate the guide pin, and the other end of the first connecting part is inserted into the second limiting part.

5. The handle linkage structure according to claim 4, **characterized in that**:
the outer periphery of the first connecting part is symmetrically provided with two first connecting grooves along the circumferential direction thereof;
two second sliding grooves are symmetrically provided on the second limiting part, and
the guide pin radially penetrates the first connecting part and the second limiting part.

6. The handle linkage structure according to claim 5, **characterized in that**:
the inner wall of the first limiting part is provided with a T-shaped first limiting groove having a head disposed along a circumferential direction thereof, and
the second connecting part has a side surface provided with a liming boss disposed at the head of the first limiting groove with one end facing a tail of the first limiting groove.

7. The handle linkage structure according to claim 1, **characterized in that**:
the first connecting part has a middle part provided with a ring-shaped abutment that abuts against an end surface of the holder.

8. The handle linkage structure according to claim 7, **characterized in that**, further comprising:
a reset torsion spring sleeved on the ring-shaped abutment and having a torsion arm at one end connected to the first connecting part and a fixed torsion arm at the other end,
wherein when the first connecting part is rotated, the reset torsion spring is compressed to drive the first connecting part to rotate in an opposite direction.

9. The handle linkage structure according to claim 7, **characterized in that**:
the holder having one end provided with a first sealing plate into which one end of the first connecting part is inserted, and a side surface of the ring-shaped abutment abuts against the first sealing plate.

10. The handle linkage structure according to claim 1, **characterized in that**, further comprising:
a reset spring provided on the outer periphery of the first connecting part, with one end fixed and the other end abutting against the guide pin to exert force on the guide pin toward the second connecting part.

11. The handle linkage structure according to any one of claims 1 to 10, **characterized in that**, the second connecting part has one end provided with a second connecting groove having an opening facing the first connecting part, the second connecting groove abuts against the side surface of the guide pin.

12. A handle assembly, **characterized in that**, comprising:
the handle linkage structure according to any one of claims 1 to 11;
a handle having one end sleeved on the other end of the holder, wherein the handle is configured to swing around a radial direction of the first connecting part, and is in contact with an end surface of the second connecting part.

13. The handle assembly according to claim 12, **characterized in that**:
the other end of the second connecting part has non-circular cross-section, and
the handle is provided with an assembly hole that has a shape corresponding to the other end of the second connecting part, and the other end of the second connecting part is assembled in the assembly hole.

14. The handle assembly according to claim 12, **characterized in that**:
a limiting abutment is provided on an outer periphery of the other end of the first limiting part,
the handle is provided with an assembly hole configured to accommodate the other end of the second connecting part, and the assembly hole is covered with a limiting baffle, and
the limiting baffle is sleeved on the first limiting part, and is provided with a limiting hole having a width not less than that of the limiting abutment and a length smaller than that of the limiting abutment.

15. The handle assembly according to claim 14, **characterized in that**:
the second connecting part has the other end surface provided with a second limiting groove, and
the assembly hole has a bottom surface provided with a limiting block extending into the second limiting groove.

16. The handle assembly according to claim 15, **characterized in that**, the limiting block is sleeved with an auxiliary plate having a side surface abutting against an end surface of the second connecting part.

17. The handle assembly according to claim 14, **characterized in that**:
a positioning abutment having a shape corresponding to that of the limiting hole is provided on a side of the limiting abutment away from the handle.
